# EUROPEAN PATENT APPLICATION

(11) **EP 4 509 985 A1**
(43) Date of publication of application: **19.02.2025**
(21) Application number: 23787704.8
(22) Date of filing: 11.04.2023
(51) Int. Cl.: G06F 9/455, G06F 9/48, G06F 9/50

(54) **CONTAINER SCHEDULING METHOD, ELECTRONIC DEVICE, AND STORAGE MEDIUM**

(30) Priority: 15.04.2022 CN 202210399975
(71) Applicant: ZTE Corporation, Shenzhen, Guangdong 518057 (CN)
(72) Inventor: TU, Yaofeng, Shenzhen, Guangdong 518057 (CN); LIU, Zijie, Shenzhen, Guangdong 518057 (CN); NIU, Jiahao, Shenzhen, Guangdong 518057 (CN); GAO, Hong, Shenzhen, Guangdong 518057 (CN); ZHANG, Dengyin, Shenzhen, Guangdong 518057 (CN); WANG, Dezheng, Shenzhen, Guangdong 518057 (CN)
(74) Representative: Aipex B.V.
(86) International application number: PCT/CN2023/087625
(87) International publication number: WO 2023/198061

(57) **Abstract**

Provided are a container scheduling method, an electronic device, and a storage medium. The method includes: classifying task containers corresponding to a service job into at least one customized description resource object according to task types of the task containers; determining an adaptability and a capacity of a cluster node to each of the task containers in the at least one customized description resource object; and configuring a scheduling relationship between the cluster node and the task containers according to the adaptability and the capacity.

## Description

### TECHNICAL FIELD

The present application relates to the field of computer application technologies, for example, a container scheduling method, an electronic device, and a storage medium.

### BACKGROUND

In recent years, with the rapid development of big data and artificial intelligence, data mining, data collection, data processing, data aggregation, and deep learning have become the mainstream job types in current cloud data centers. These different types of data jobs need to be divided into interdependent tasks that are executed collaboratively.

With the development of container virtualization technologies, users tend to encapsulate tasks along with their dependencies into a lightweight container to execute these tasks. In a container deployment scheme in the related art, a corresponding container is created for each task of big data and artificial intelligence jobs. Since the big data and artificial intelligence jobs often include multiple tasks, the big data and artificial intelligence jobs often include multiple containers. However, the batch scheduling efficiency of service jobs is relatively low in the related art.

### SUMMARY

Embodiments of the present application provide a container scheduling method, an electronic device, and a storage medium, which can not only achieve the batch scheduling of service jobs but also improve the container scheduling efficiency and reduce the waiting time of the service jobs.

An embodiment of the present application provides a container scheduling method. The method includes the following:

Task containers corresponding to a service job are classified into at least one customized description resource object according to task types of the task containers.

An adaptability and a capacity of a cluster node to each of the task containers in the at least one customized description resource object are determined.

A scheduling relationship between the cluster node and the task containers is configured according to the adaptability and the capacity.

An embodiment of the present application provides an electronic device. The electronic device includes at least one processor and a memory configured to store at least one program.

The at least one program, when executed by the at least one processor, causes the at least one processor to perform the method of any embodiment of the present application.

An embodiment of the present application provides a computer-readable storage medium. The computer-readable storage medium has at least one program stored thereon, where the at least one program, when executed by at least one processor, causes the method of any embodiment of the present application to be performed.

In the embodiments of the present application, the task containers are classified into different customized description resource objects according to the task types of the service job, the adaptability and the capacity of the cluster node to the task container in each customized description resource object are determined, and the scheduling relationship between the cluster node and the task containers is configured according to the adaptability and the capacity so that when the batch scheduling of the task containers is achieved, the container scheduling efficiency can be improved. The task containers are allocated to different cluster nodes according to the adaptability and the capacity so that a degree of matching between a task container and a cluster node can be improved and the problem of resource contention of the cluster node can be solved.

### BRIEF DESCRIPTION OF DRAWINGS

FIG. 1 is a schematic diagram of a working mode in a pipeline scheduling method of containers.
FIG. 2 is a schematic diagram of a working mode in a batch scheduling method of containers.
FIG. 3 is a schematic diagram of the composition of a big data or artificial intelligence job.
FIG. 4 is a schematic diagram of a resource contention problem during the batch scheduling of containers.
FIG. 5 is a flowchart of a container scheduling method according to an embodiment of the present application.
FIG. 6 is a flowchart of a container scheduling method according to an embodiment of the present application.
FIG. 7 is another flowchart of a container scheduling method according to an embodiment of the present application.
FIG. 8 is another flowchart of a container scheduling method according to an embodiment of the present application.
FIG. 9 is a structural diagram of a container scheduling apparatus according to an embodiment of the present application.
FIG. 10 is a schematic diagram of a scenario of a container scheduling method according to an embodiment of the present application.
FIG. 11 is an example diagram of a container scheduling apparatus according to an embodiment of the present application.
FIG. 12 is an example flowchart of a container scheduling method according to an embodiment of the present application.
FIG. 13 is an example flowchart of job classification according to an embodiment of the present application.
FIG. 14 is an example flowchart of job type check according to an embodiment of the present application.
FIG. 15 is an example flowchart of sorting of to-be-scheduled jobs according to an embodiment of the present application.
FIG. 16 is an example flowchart of node filtering and adaptability calculation according to an embodiment of the present application.
FIG. 17 is an example flowchart of node capacity calculation according to an embodiment of the present application.
FIG. 18 is an example flowchart of scheduling node selection according to an embodiment of the present application.
FIG. 19 is an example flowchart of node binding according to an embodiment of the present application.
FIG. 20 is a structural diagram of an electronic device according to an embodiment of the present application.

### DETAILED DESCRIPTION

It is to be understood that the embodiments described herein are intended to explain the present application and not to limit the present application.

In the subsequent description, words for representing elements, such as "module", "component", and "unit", are merely used for facilitating the description of the present application and have no particular meanings in themselves. Therefore, "module", "component", and "unit" can be used in a mixed manner.

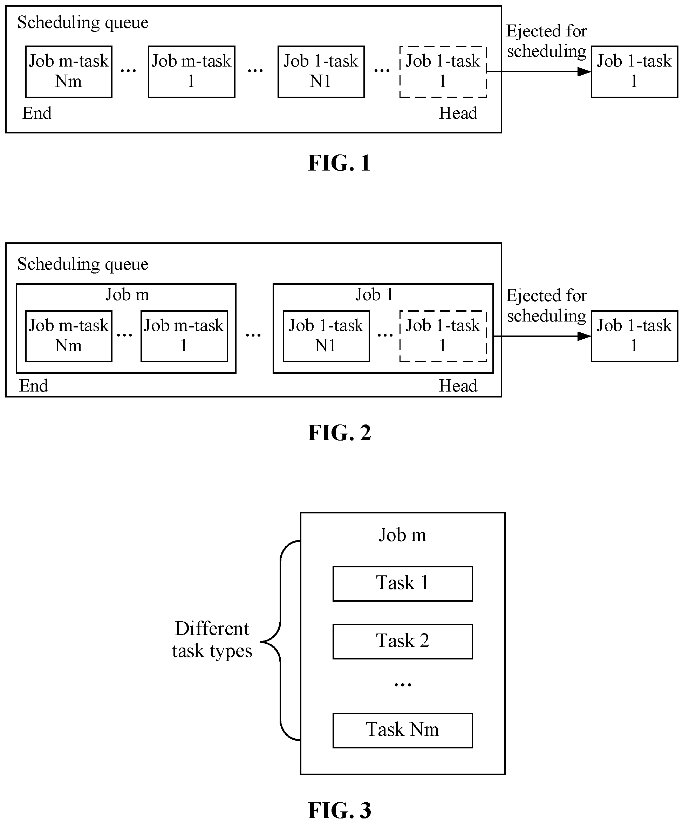

In a container scheduling method of the related art such as Kubernetes, container scheduling is performed in a pipeline scheduling manner with containers as units, that is, a container corresponding to only one task is scheduled in one scheduling period, as shown in FIG. 1. The pipeline scheduling of containers has the defect of low scheduling efficiency when big data and artificial intelligence jobs are processed. To improve the scheduling efficiency of the big data and artificial intelligence jobs, researchers have proposed a batch scheduling manner shown in FIG. 2. The batch scheduling manner is to schedule a big data or artificial intelligence job including different types of tasks as a scheduling unit in each scheduling period. Referring to FIG. 3, the big data or artificial intelligence job often includes different tasks. To make a scheduling decision in the batch scheduling manner of the related art, amounts of required resources of all the tasks in the big data or artificial intelligence job need to be traversed. As a result, the batch scheduling efficiency of service jobs is still relatively low in the related art.

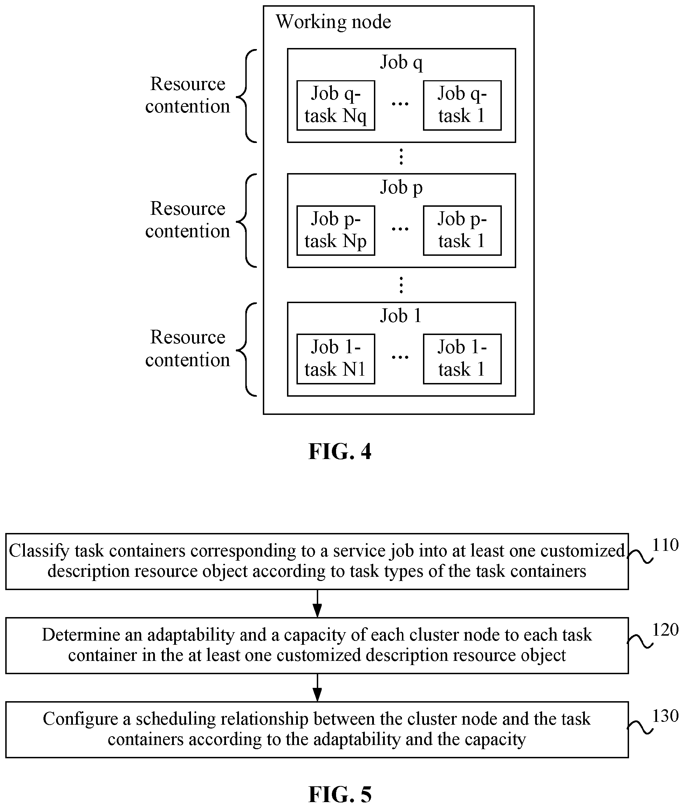

In the related art, a batch scheduling manner represented by Volcano is to schedule all tasks included in one big data and artificial intelligence job onto the same node as much as possible. Since these tasks are likely to require the same resource types, the batch scheduling manner easily causes the problem of resource contention to the node. As shown in FIG. 4, at present, the batch scheduling manner in the related art can only improve the scheduling efficiency of the big data and artificial intelligence jobs to a certain extent, and the problems of low scheduling efficiency and resource contention of the node still exist. As for the preceding problems, embodiments of the present disclosure provide a container scheduling method to improve the scheduling efficiency of the big data and artificial intelligence jobs and solve the problem of resource contention of the node.

FIG. 5 is a flowchart of a container scheduling method according to an embodiment of the present application. The embodiment of the present application is applicable to the scheduling of a big data or artificial intelligence job. The method may be performed by a container scheduling apparatus which may be implemented by software and/or hardware. Referring to FIG. 5, the method according to the embodiment of the present application includes the following operations.

In operation 110, task containers corresponding to a service job are classified into at least one customized description resource object according to task types of the task containers.

The task types may be service types corresponding to a specific big data or artificial intelligence service and may represent functions to be implemented by the job or data to be transmitted for the job. The service job may be a transaction to be executed by big data or artificial intelligence. At least one service job may exist. A task container may be an environment for processing a service. One resource object may include at least one task container. It is to be understood that the customized description resource object may be a resource object customized by a user as required, and task containers managed in the customized description resource object may correspond to the same task type.

In the embodiments of the present application, the task type corresponding to the service job is determined, and task containers corresponding to service jobs may be classified into different customized description resource objects according to the task types. A correspondence relationship may be configured between customized description resource objects and service types, and the task containers corresponding to the service jobs may be classified according to the correspondence relationship between service types and customized description resource objects.

In operation 120, an adaptability and a capacity of each cluster node to each task container in the at least one customized description resource object are determined.

The cluster node may be a processing node for processing the service job. At least one cluster node may exist. Different cluster nodes may be located at the same position or different positions. The adaptability may be a degree of matching between the cluster node and a task container corresponding to a service job in a different customized description resource object, and the degree of matching may be determined by factors such as resources and processing performance. The capacity may be an ability of the cluster node to accommodate task containers corresponding to service jobs, and the capacity may be determined by an amount of resources consumed by a task container in the customized description resource object and an amount of available resources of the cluster node.

The adaptability of each cluster node to each task container in different customized description resource objects and the capacity of each cluster node to accommodate each task container in the different customized description resource objects may be determined.

In operation 130, a scheduling relationship between the cluster node and the task containers is configured according to the adaptability and the capacity.

The scheduling relationship may be a configured relationship between the task containers and the cluster node, and the cluster node having the scheduling relationship may process the corresponding task containers.

In the embodiments of the present application, according to adaptabilities and capacities corresponding to each task container, the cluster node that best matches the task container may be determined so that the scheduling relationship between the task containers and the cluster node can be built.

In the embodiments of the present application, the task containers are classified into the different customized description resource objects according to the task types of the service job, the adaptability and the capacity of the cluster node to the task container in each customized description resource object are determined, and the scheduling relationship between the cluster node and the task containers is configured according to the adaptability and the capacity so that when the batch scheduling of the task containers is achieved, the container scheduling efficiency can be improved. The task containers are allocated to different cluster nodes according to the adaptability and the capacity so that a degree of matching between the task container and the cluster node can be improved and the problem of resource contention of the cluster node can be solved.

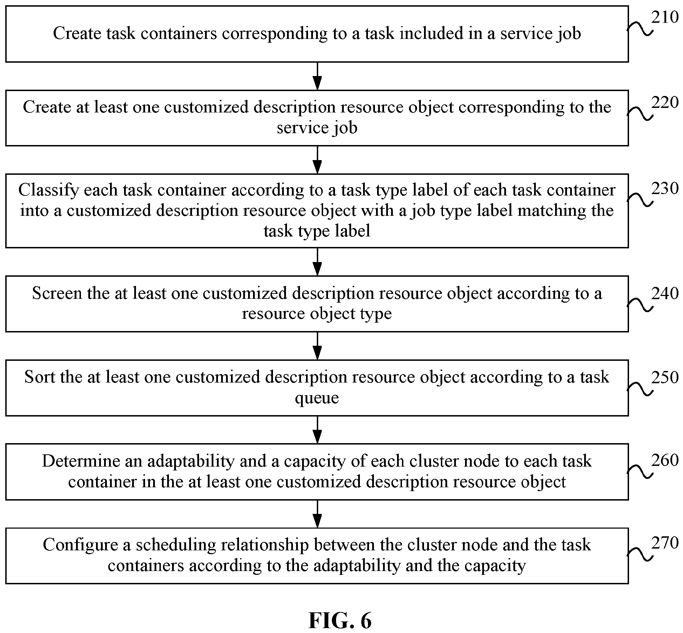

FIG. 6 is a flowchart of a container scheduling method according to an embodiment of the present application. This embodiment of the present application is embodied based on the preceding embodiment of the present application. Referring to FIG. 6, the method according to the embodiment of the present application includes the following operations.

In operation 210, task containers corresponding to a task included in a service job are created, where each task container includes an image name, a container startup command, a container startup parameter, and a task type label.

In the embodiments of the present application, the service job may include multiple tasks which may be transactions to be processed by cluster nodes. For each service job, the corresponding task containers may be created for the tasks included in the service job, where each task container may have the image name, the container startup command, the container startup parameter, and the task type label. For example, in Kubernetes, a container creation module of a Kubernetes API-Server creates a corresponding Kubernetes Pod for each task in a job.

In operation 220, at least one customized description resource object corresponding to the service job is created, where each customized description resource object includes a name, a job type label, and a scheduling priority label.

The customized description resource object may be created for the service job, and information such as the name, the job type label, and the scheduling priority label may be set for the customized description resource object.

In operation 230, each task container is classified according to the task type label of each task container into a customized description resource object with a job type label matching the task type label.

In the embodiments of the present application, the task containers may be classified into different customized description resource objects according to task type labels configured for the task containers. The specific job type label of the customized description resource object may match the task type label of the task container. The matching may include types being the same or types being associated.

In operation 240, the at least one customized description resource object is screened according to a resource object type.

A type of the customized description resource object may be extracted. If the extracted type of the customized description resource object is the same as the set resource object type, the customized description resource object is further processed. If the extracted type of the customized description resource object is different from the set resource object type, the customized description resource object is not processed.

In operation 250, the at least one customized description resource object is sorted according to a task queue.

The task queue may be a storage space for temporarily storing the task containers. The customized description resource object in the task queue may adopt a first-in, first-out output decision.

In the embodiments of the present application, the customized description resource objects may be input into the task queue, and the customized description resource objects may be sorted in the task queue to facilitate the subsequent scheduling of the task containers. At least one task queue may exist. For example, customized description resource objects with the same resource object type may be stored in the same task queue, or different customized description resource objects may be stored in different task queues.

In operation 260, an adaptability and a capacity of each cluster node to each task container in the at least one customized description resource object are determined.

In operation 270, a scheduling relationship between the cluster node and the task container is configured according to the adaptability and the capacity.

Based on the preceding embodiment of the present application, that the at least one customized description resource object is sorted according to the task queue includes at least one of: sorting the at least one customized description resource object in the task queue according to an entry order of the at least one customized description resource object; or sorting the at least one customized description resource object in the task queue according to a scheduling priority of the at least one customized description resource object.

The entry order may be a time order in which the at least one customized description resource object reaches the task queue. The scheduling priority may be an order in which the at least one customized description resource object is scheduled.

In the embodiments of the present application, the customized description resource objects may be sorted in the task queue according to the entry order in which the customized description resource objects reach the task queue, and a customized description resource object that reaches the task queue first may be output first. Alternatively, the customized description resource objects may be sorted in the task queue according to scheduling priorities configured for the customized description resource objects, and a task container in the customized description resource object with a high scheduling priority is output first. Alternatively, the customized description resource objects may be sorted in conjunction with the entry order and the scheduling priorities. For example, the customized description resource objects are arranged sequentially in the task queue in descending order of the scheduling priorities. For multiple customized description resource objects with the same scheduling priority, the multiple customized description resource objects may be arranged sequentially in the task queue according to an entry order of the multiple customized description resource objects.

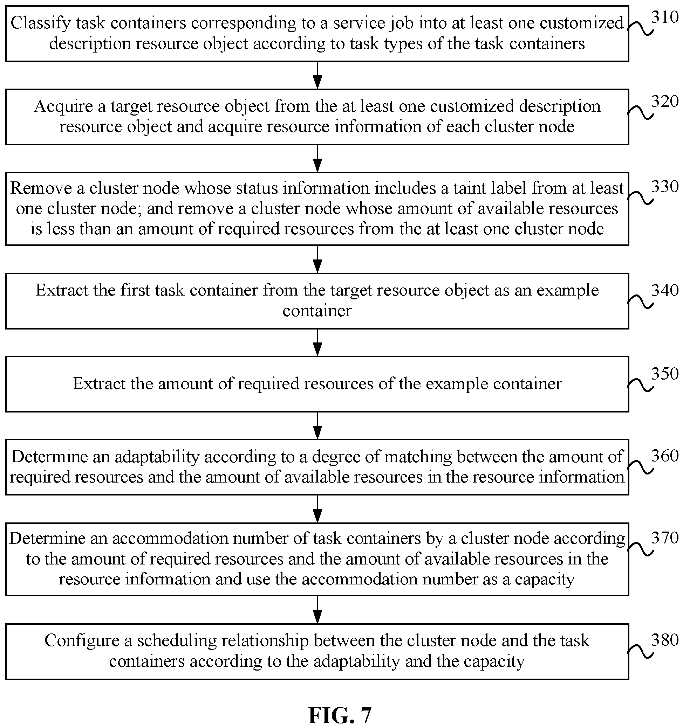

FIG. 7 is another flowchart of a container scheduling method according to an embodiment of the present application. This embodiment of the present application is embodied based on the preceding embodiment of the present application. Referring to FIG. 7, the method according to the embodiment of the present application includes the following operations.

In operation 310, task containers corresponding to a service job are classified into at least one customized description resource object according to task types of the task containers.

In operation 320, a target resource object is acquired from the at least one customized description resource object and resource information of each cluster node is acquired.

The target resource object may be a resource object currently processed among multiple customized description resource objects. The target resource object may be acquired randomly or selected from a task queue.

In the embodiments of the present application, a resource object to be processed currently may be used as the target resource object from the customized description resource objects. Meanwhile, the resource information of each cluster node may be extracted. The resource information may reflect current performance conditions of a different cluster node. The resource information may include resource types, total amounts of resources, amounts of available resources, and other information of the cluster node.

In operation 330, a cluster node whose status information includes a taint label is removed from at least one cluster node; and a cluster node whose amount of available resources is less than an amount of required resources is removed from the at least one cluster node.

The taint label may be key-value attribute data defined on the cluster node. When the taint label exists on the cluster node, the cluster node refuses to schedule the task containers. The amount of required resources may represent an amount of resources required by a task container in the customized description resource object.

The at least one cluster node may be screened according to the status information. A screening process may be described as follows: the status information of each cluster node is extracted; if the extracted status information has the taint label, the cluster node corresponding to the status information refuses to schedule the task containers and may be removed. The at least one cluster node may also be screened according to the resource information. A specific screening process may be described as follows: the amount of available resources is extracted from the resource information of each cluster node; if the amount of available resources is less than a total amount of resources required by the task container in the customized description resource object, it is determined that the cluster node cannot accommodate the task container to schedule the task container, and the cluster node may be removed.

In operation 340, the first task container is extracted from the target resource object as an example container.

The example container may be a reference task container for measuring a resource status of containers in the target resource object. The example container may be a task container added first to the target resource object. The example container is not limited to the first task container. The example container may be a task container randomly selected from the target resource object or a virtual example container constructed according to an average amount of resources of all task containers in the target resource object.

In the embodiments of the present application, the first task container may be selected as the example container from a customized description resource object denoted as the target resource object.

In operation 350, the amount of required resources of the example container is extracted.

A container list of the example container may be extracted, and amounts of different resources required by each container object in the container list may be determined. For example, amounts of resources, such as a central processing unit (CPU), graphics processing unit (GPU), memory, disk, or network bandwidth, required by different container objects in the container list of the example container may be extracted, and a sum of the same resources may be used as the amount of required resources.

In operation 360, an adaptability is determined according to a degree of matching between the amount of required resources and the amount of available resources in the resource information.

The amount of available resources may be an amount of remaining and unoccupied resources of a different type in each cluster node, for example, an available amount of the CPU, an available amount of the GPU, an available memory, an available disk, and an available network bandwidth of the cluster node.

In the embodiments of the present application, the degree of matching may be determined based on the amount of required resources of the task container and the amount of available resources of the cluster node. For example, the ratio of the amount of required resources to the amount of available resources may be used as the degree of matching. When the ratio is less than 1, the more the ratio approximates to 1, the higher the degree of matching. A manner of determining the degree of matching by the amount of required resources and the amount of available resources is not limited here.

In operation 370, an accommodation number of task containers by the cluster node is determined according to the amount of required resources and the amount of available resources in the resource information and used as a capacity.

The accommodation number may be the number of example containers accommodated in the cluster node. The accommodation number may be determined according to a quotient of the amount of available resources and the amount of required resources.

In the embodiments of the present application, the corresponding amount of available resources may be extracted for each cluster node, and the quotient of the amount of available resources and the amount of required resources of the example container may be used as the accommodation number. The accommodation number may be the capacity of the cluster node to the task container.

In operation 380, a scheduling relationship between the cluster node and the task containers is configured according to the adaptability and the capacity.

Based on the preceding embodiment of the present application, that the adaptability is determined according to the degree of matching between the amount of required resources and the amount of available resources in the resource information includes the following:

The degree of matching between the amount of required resources and the amount of available resources is determined according to a LeastRequestedPriority policy and a BalancedResourceAllocation policy.

In the embodiments of the present application, the degree of matching between each cluster node and the example container may be jointly determined according to the LeastRequestedPriority policy and the BalancedResourceAllocation policy. The LeastRequestedPriority policy may include determining the degree of matching by the ratio of the amount of required resources to a total amount of resources, where the degree of matching = (the amount of available resources - the amount of required resources)/the total amount of resources. The higher the degree of matching, the higher the adaptability of the cluster node to the task container in the target resource object. The BalancedResourceAllocation policy may include a higher weight for a cluster node with a smaller variance of utilization of the CPU and memory. After the degree of matching is determined by the LeastRequestedPriority policy, the degree of matching may be adjusted using the weight according to the utilization of the CPU and memory of each cluster node.

Based on the preceding embodiment of the present application, that the accommodation number of task containers by the cluster node is determined according to the amount of required resources and the amount of available resources in the resource information includes the following:

The amount of required resources of each resource type in the example container and the amount of available resources of each resource type in the resource information are extracted. For each resource type, the quotient of the amount of available resources and the amount of required resources is determined to obtain multiple quotients, and a minimum quotient of the multiple quotients is used as the accommodation number.

In the embodiments of the present application, amounts of different resources required by the example container may be extracted, for example, required amounts of the CPU, GPU, memory, disk, and network bandwidth are extracted. For the cluster node, amounts of available resources of the preceding types may be extracted separately. For the same resource, the quotient of the amount of available resources and the amount of required resources may be used as a resource accommodation number for the corresponding resource, and a resource accommodation number with a minimum value may be used as the accommodation number of example containers by the cluster node.

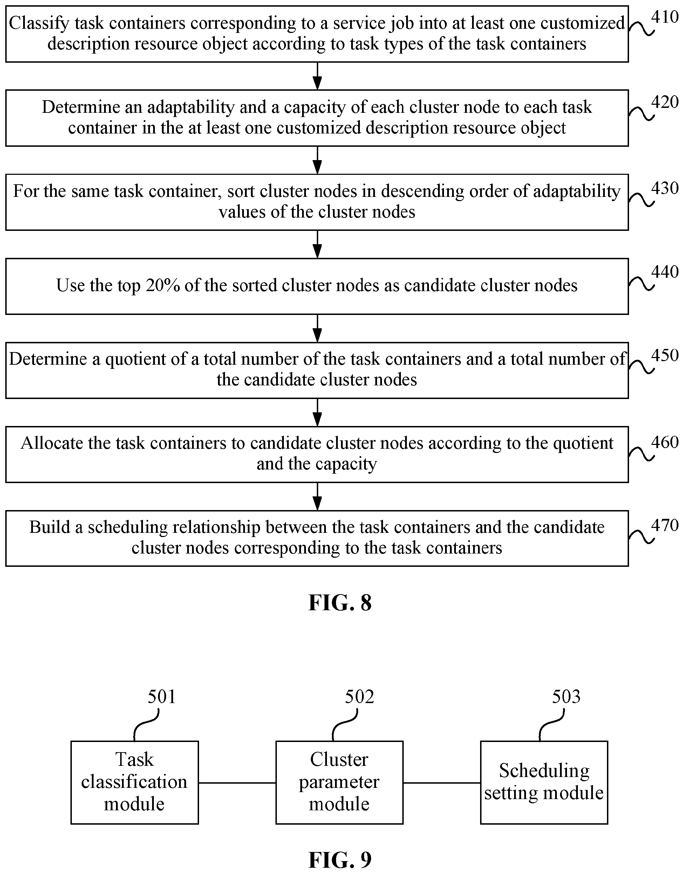

FIG. 8 is another flowchart of a container scheduling method according to an embodiment of the present application. This embodiment of the present application is embodied based on the preceding embodiment of the present application. Referring to FIG. 8, the method according to the embodiment of the present application includes the following operations.

In operation 410, task containers corresponding to a service job are classified into at least one customized description resource object according to task types of the task containers.

In operation 420, an adaptability and a capacity of each cluster node to each task container in the at least one customized description resource object are determined.

In operation 430, for the same task container, cluster nodes are sorted in descending order of adaptability values of the cluster nodes.

In the embodiments of the present application, for the same task container, the adaptability values may be sorted in descending order, and the cluster nodes may be arranged according to the descending order and a correspondence relationship between the adaptability values and the cluster nodes. It is to be understood that each task container may correspond to a sequence of sorted cluster nodes.

In operation 440, the top 20% of the sorted cluster nodes are used as candidate cluster nodes.

The top 20% of the sorted cluster nodes may be selected as the candidate cluster nodes, and the candidate cluster nodes may be used for task container scheduling.

In operation 450, a quotient of a total number of the task containers and a total number of the candidate cluster nodes is determined.

The total number of the candidate cluster nodes may be a total number of cluster nodes selected as the candidate cluster nodes, and the total number of the task containers may be a total number of the task containers included in the customized description resource object.

In the embodiments of the present application, the quotient of the total number of the task containers and the total number of the candidate cluster nodes may be calculated.

In operation 460, the task containers are allocated to candidate cluster nodes according to the quotient and the capacity.

In the embodiments of the present application, the task containers may be allocated to the candidate cluster nodes based on the quotient and the capacity determined in the preceding processes so that the task containers in the customized description resource object can be allocated to the candidate cluster nodes. For example, a number of task containers corresponding to the quotient may be allocated to each candidate cluster node, and the number of task containers allocated to each candidate cluster node should not be greater than the capacity.

In operation 470, a scheduling relationship between the task containers and the candidate cluster nodes corresponding to the task containers is built.

Identification information of a candidate cluster node to which the task container is allocated may be stored in the task container. The identification information may be used for indicating a scheduling relationship between the task container and the candidate cluster node. For example, a node name field may be set for the task container, and the node name field may be used for storing a node name of the candidate cluster node to which the task container is allocated.

Based on the preceding embodiment of the present application, that the task containers are allocated to the candidate cluster nodes according to the quotient and the capacity includes the following:

Whether the capacity of each candidate cluster node is greater than or equal to the quotient is determined in descending order of adaptability values of the candidate cluster nodes. If so, a number of task containers are allocated to each candidate cluster node, the number being the quotient. If not, a number of task containers are allocated to each candidate cluster node, the number being the capacity.

The candidate cluster nodes may be sorted according to the capacity, the candidate cluster node is selected one by one from the sorted candidate cluster nodes, and whether the capacity of the candidate cluster node is greater than the quotient of the total number of the task containers and the total number of the candidate cluster nodes is determined. If the capacity of the candidate cluster node is greater than or equal to the quotient, a number of task containers are allocated to the current candidate cluster node, the number being the quotient. If the capacity of the candidate cluster node is less than the quotient, a number of task containers are allocated to the current candidate cluster node, the number being the capacity.

Based on the preceding embodiment of the present application, in response to determining a task container unallocated to any of the candidate cluster nodes, the second 20% of the sorted cluster nodes are used as new candidate cluster nodes and the unallocated task container is allocated to a new candidate cluster node.

After allocation to the candidate cluster nodes, each task container may be determined. Whether all the task containers are allocated to the candidate cluster nodes is determined. For example, whether the node name field for the task container is null is determined. If so, it is determined that the task container is unallocated. In this case, the currently selected candidate cluster nodes cannot satisfy the requirement for scheduling all the task containers. With the currently selected candidate cluster nodes of the sorted cluster nodes as a starting point, 20% of the sorted cluster nodes after the starting point may be re-selected as the new candidate cluster nodes, and the unallocated task container may be allocated to the new candidate cluster node in the preceding allocation manner.

Based on the preceding embodiment of the present application, that the scheduling relationship between the task containers and the candidate cluster nodes corresponding to the task containers is built includes the following:

The node name field for each task container is set as the identification information of a candidate cluster node corresponding to each task container.

In the embodiments of the present application, binding the scheduling relationship may be setting the node name field for the task container as the identification information of the candidate cluster node to which the task container belongs. The identification information may include a network address, node name, or node number of the candidate cluster node.

FIG. 9 is a structural diagram of a container scheduling apparatus according to an embodiment of the present application. The apparatus may perform the container scheduling method of any embodiment of the present application and has function modules and beneficial effects corresponding to the method performed. The apparatus may be implemented by software and/or hardware. Referring to FIG. 9, the apparatus according to the embodiment of the present application includes a task classification module 501, a cluster parameter module 502, and a scheduling setting module 503.

The task classification module 501 is configured to classify task containers corresponding to a service job into at least one customized description resource object according to task types of the task containers.

The cluster parameter module 502 is configured to determine an adaptability and a capacity of each cluster node to each task container in the at least one customized description resource object.

The scheduling setting module 503 is configured to configure a scheduling relationship between the cluster node and the task containers according to the adaptability and the capacity.

In the embodiments of the present application, the task classification module classifies the task containers into different customized description resource objects according to the task types of the service job, the cluster parameter module determines the adaptability and the capacity of the cluster node to the task container in each customized description resource object, and the scheduling setting module configures the scheduling relationship between the cluster node and the task containers according to the adaptability and the capacity so that when the batch scheduling of the task containers is achieved, the container scheduling efficiency can be improved. The task containers are allocated to different cluster nodes according to the adaptability and the capacity so that a degree of matching between a task container and a cluster node can be improved and the problem of resource contention of the cluster node can be solved.

Based on the preceding embodiment of the present application, the apparatus further includes a queue processing module.

The queue processing module is configured to sort the at least one customized description resource object according to a task queue.

Based on the preceding embodiment of the present application, the apparatus further includes a resource object screening module.

The resource object screening module is configured to screen the at least one customized description resource object according to a resource object type.

Based on the preceding embodiment of the present application, the task classification module 501 includes a container creation unit, a resource object unit, and a classification unit.

The container creation unit is configured to create the task containers corresponding to a task included in the service job, where each task container includes an image name, a container startup command, a container startup parameter, and a task type label.

The resource object unit is configured to create the at least one customized description resource object corresponding to the service job, where each customized description resource object includes a name, a job type label, and a scheduling priority label.

The classification unit is configured to classify each task container according to the task type label of each task container into a customized description resource object with a job type label matching the task type label.

Based on the preceding embodiment of the present application, the cluster parameter module 502 includes an example determination unit, a resource extraction unit, an adaptability unit, and a capacity unit.

A target resource object is acquired from the at least one customized description resource object and resource information of each cluster node is acquired.

The example determination unit is configured to extract the first task container from the target resource object as an example container.

The resource extraction unit is configured to extract an amount of required resources of the example container.

The adaptability unit is configured to determine the adaptability according to a degree of matching between the amount of required resources and an amount of available resources in the resource information.

The capacity unit is configured to determine an accommodation number of task containers by the cluster node according to the amount of required resources and the amount of available resources in the resource information and use the accommodation number as the capacity.

Based on the preceding embodiment of the present application, the cluster parameter module 502 further includes a cluster screening unit.

The cluster screening unit is configured to remove a cluster node whose status information includes a taint label from at least one cluster node and remove a cluster node whose amount of available resources is less than the amount of required resources from the at least one cluster node.

Based on the preceding embodiment of the present application, the adaptability unit is configured to determine the degree of matching between the amount of required resources and the amount of available resources according to a LeastRequestedPriority policy and a BalancedResourceAllocation policy.

Based on the preceding embodiment of the present application, the capacity unit is configured to extract the amount of required resources of each resource type in the example container and the amount of available resources of each resource type in the resource information; and for each resource type, determine a quotient of the amount of available resources and the amount of required resources to obtain multiple quotients, and use a minimum quotient of the multiple quotients as the accommodation number.

Based on the preceding embodiment of the present application, the scheduling setting module 503 includes a sorting unit, a candidate selection unit, a quotient determination unit, a task allocation unit, and a relationship building unit.

The sorting unit is configured to, for the same task container, sort cluster nodes in descending order of adaptability values of the cluster nodes.

The candidate selection unit is configured to use the top 20% of the sorted cluster nodes as candidate cluster nodes.

The quotient determination unit is configured to determine a quotient of a total number of the task containers and a total number of the candidate cluster nodes.

The task allocation unit is configured to allocate the task containers to candidate cluster nodes according to the quotient and the capacity.

The relationship building unit is configured to build a scheduling relationship between the task containers and the candidate cluster nodes corresponding to the task containers.

Based on the preceding embodiment of the present application, the task allocation unit is configured to determine, in descending order of adaptability values of the candidate cluster nodes, whether the capacity of each candidate cluster node is greater than or equal to the quotient; if so, allocate a number of task containers to each candidate cluster node, the number being the quotient; and if not, allocate a number of task containers to each candidate cluster node, the number being the capacity.

Based on the preceding embodiment of the present application, the scheduling setting module 503 further includes an abnormality processing unit.

The abnormality processing unit is configured to, in response to determining a task container unallocated to any of the candidate cluster nodes, use the second 20% of the sorted cluster nodes as new candidate cluster nodes and allocate the unallocated task container to a new candidate cluster node.

Based on the preceding embodiment of the present application, the relationship building unit is configured to set a node name field for each task container as identification information of a candidate cluster node corresponding to each task container.

Based on the preceding embodiment of the present application, the queue processing module is configured to sort the at least one customized description resource object in the task queue according to an entry order of the at least one customized description resource object; or sort the at least one customized description resource object in the task queue according to a scheduling priority of the at least one customized description resource object.

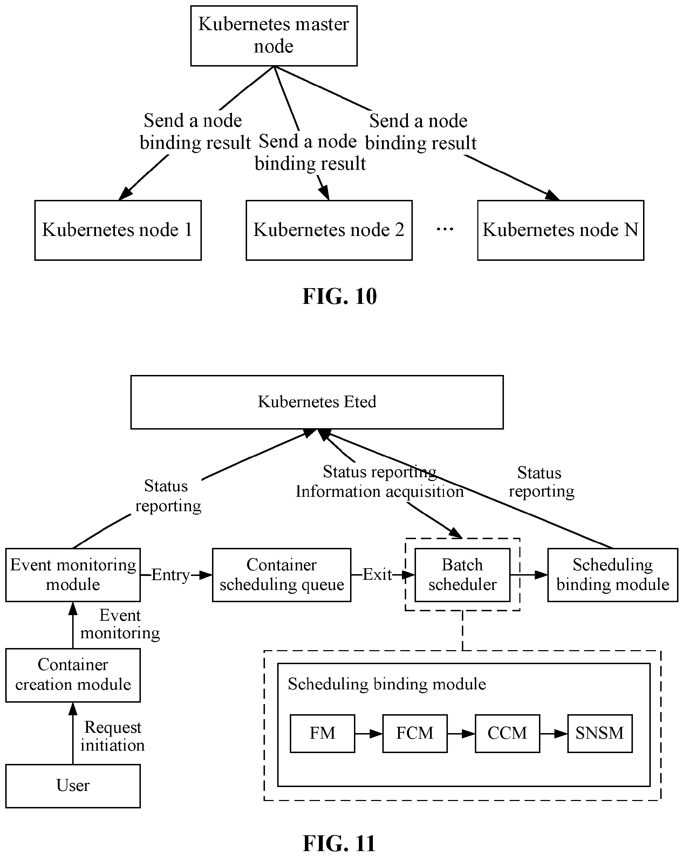

In an example embodiment, container scheduling based on a Kubernetes architecture is used as an example. Referring to FIG. 10, a Kubernetes cluster includes one Kubernetes master node and several Kubernetes nodes. In an embodiment of the present application, the Kubernetes master node schedules to-be-scheduled jobs. The Kubernetes nodes deploy and execute to-be-scheduled tasks according to a binding result of the Kubernetes master node. Referring to FIG. 11, a container scheduling apparatus according to an embodiment of the present application is implemented by six components including a container creation module of a Kubernetes API-Server, an event monitoring module of the Kubernetes API-Server, a Kubernetes etcd, a Kubernetes-based batch scheduler, a container scheduling queue in the Kubernetes-based batch scheduler, and a scheduling binding module of the Kubernetes API-Server. The container creation module of the Kubernetes API-Server is configured to create a corresponding container for each task in a big data or artificial intelligence job and classify tasks into different to-be-scheduled jobs according to task type labels. The event monitoring module of the Kubernetes API-Server is configured to monitor a creation event of the container creation module of the Kubernetes API-Server and check types of the to-be-scheduled jobs. The Kubernetes etcd is configured to store running status information of each component in a batch scheduling apparatus of the present application and cluster information. The running status information of each component in the batch scheduling apparatus includes a time point of a running error and an error event log of the component. The cluster information includes status information and resource information of each node and container in a cluster. The container scheduling queue in the Kubernetes-based batch scheduler is configured to sort the to-be-scheduled jobs according to scheduling priorities of the to-be-scheduled jobs and time points at which the to-be-scheduled jobs enter the queue to obtain a scheduling order. The Kubernetes-based batch scheduler is configured to schedule a to-be-scheduled job ejected from the container scheduling queue. The Kubernetes-based batch scheduler includes a filtering module, an adaptability calculation module, a capacity calculation module, and a scheduling node selection module. The filtering module is configured to filter out a node that does not satisfy status check or resource check. The adaptability calculation module is configured to calculate an adaptability of a node passing through the filtering module. The capacity calculation module is configured to calculate a capacity of the node passing through the filtering module. The scheduling node selection module is configured to select a most appropriate scheduling node for each task in the to-be-scheduled job according to the adaptability and capacity of the node. The scheduling binding module of the Kubernetes API-Server is configured to bind each task in the to-be-scheduled job to its scheduling node according to a scheduling result sent by the Kubernetes-based batch scheduler.

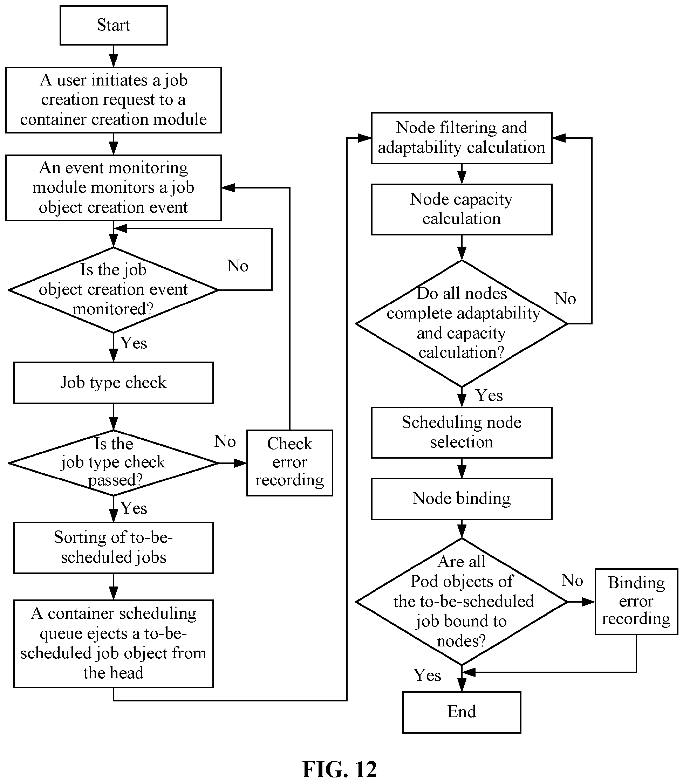

FIG. 12 is an example flowchart of a container scheduling method according to an embodiment of the present application. Referring to FIG. 12, the method according to the embodiment of the present application includes the following seven operations: job classification, job type check, the sorting of the to-be-scheduled jobs, node filtering and adaptability calculation, node capacity calculation, scheduling node selection, and node binding.

Firstly, the container creation module of the Kubernetes API-Server creates the corresponding container according to a job configuration request submitted by a user and classifies the tasks in the job into different to-be-scheduled jobs according to the task type labels. The event monitoring module of the Kubernetes API-Server checks the types of the to-be-scheduled jobs. Secondly, the container scheduling queue in the Kubernetes-based batch scheduler sorts scheduling priorities of to-be-scheduled jobs that pass the job type check and ejects the to-be-scheduled job from the head of the queue. Thirdly, the filtering module and the adaptability calculation module of the Kubernetes-based batch scheduler perform the node filtering and the adaptability calculation, respectively. Next, the capacity calculation module of the Kubernetes-based batch scheduler calculates the capacity of the node. Subsequently, the scheduling node selection module of the Kubernetes-based batch scheduler selects the most appropriate scheduling node for each task in the to-be-scheduled job according to the adaptability and capacity of the node. Finally, the scheduling binding module of the Kubernetes API-Server binds each task in the to-be-scheduled job to its scheduling node.

A batch scheduling method of containers based on the Kubernetes architecture includes the processing operations below.

### First operation: Job classification

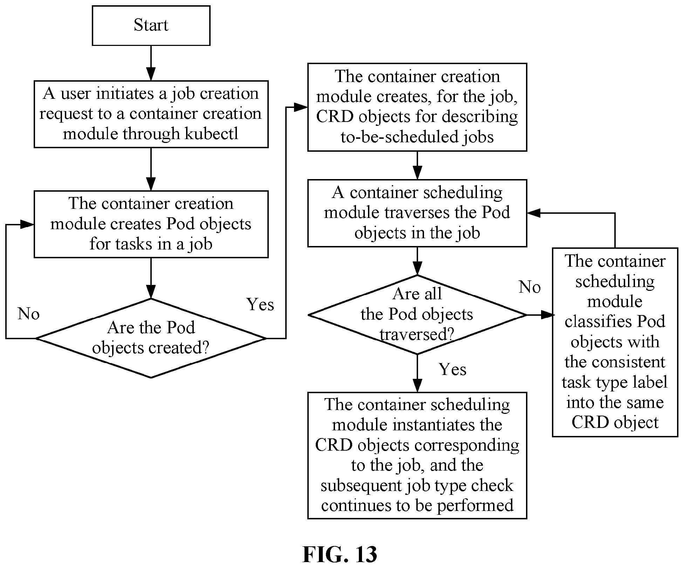

The container creation module of the Kubernetes API-Server creates the corresponding container for each task in the big data or artificial intelligence job and classifies the tasks into the different to-be-scheduled jobs according to the task type labels, as shown in FIG. 13. Each to-be-scheduled job after classification has the consistent task type.

This operation may include the following.
(1) The user sends a request for creating the big data or artificial intelligence job to the container creation module of the Kubernetes API-Server through a kubectl command line tool in Kubernetes. The container creation module of the Kubernetes API-Server creates a corresponding Kubernetes Pod (simply referred to as Pod hereinafter) for each task in the job. The created Pod object includes an image name of a container in the Pod, a container startup command, a container startup parameter, and a task type label corresponding to the Pod.
(2) If a job type submitted by the user is the big data or artificial intelligence job, the container creation module of the Kubernetes API-Server creates, for the job, Kubernetes Custom Resource Definition (CRD) (simply referred to as CRD hereinafter) resource objects for describing the to-be-scheduled jobs. The created CRD resource object includes a name of the CRD resource object, a job type label corresponding to the CRD resource object, and a scheduling priority label of the CRD resource object. The container creation module of the Kubernetes API-Server classifies Pods with the same task type label into the CRD resource object corresponding to the same to-be-scheduled job. Specifically, the container creation module of the Kubernetes API-Server traverses all Pod objects of the big data or artificial intelligence job and classifies the Pod objects with the consistent task type label into the CRD resource object corresponding to the same to-be-scheduled job. The job type label of the CRD resource object is consistent with the task type label of all the Pod objects included in the CRD resource object.
(3) The container creation module of the Kubernetes API-Server instantiates the CRD resource objects corresponding to the to-be-scheduled jobs and stores the CRD resource objects in the Kubernetes API-Server.

### Second operation: Job type check

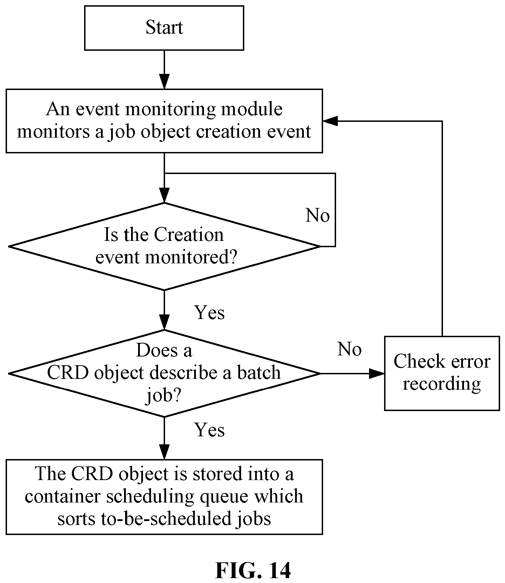

The event monitoring module of the Kubernetes API-Server checks the types of the to-be-scheduled jobs, as shown in FIG. 14. Only the to-be-scheduled jobs that pass the type check can be sent to the container scheduling queue.

This operation may include the following.
(1) The event monitoring module of the Kubernetes API-Server succeeds in monitoring an object creation event in the container creation module of the Kubernetes API-Server.
(2) The event monitoring module of the Kubernetes API-Server checks a type of the object corresponding to the to-be-scheduled job in the creation event. If a resource type created for the to-be-scheduled job is not a CRD resource type for describing a batch job, the to-be-scheduled job is not considered to pass the check. The event monitoring module of the Kubernetes API-Server writes a check ending time point and a check error into a Kubernetes event log and stores the Kubernetes event log in the Kubernetes etcd. Otherwise, the to-be-scheduled job is considered to pass the check, the CRD resource object corresponding to the to-be-scheduled job is sent to the container scheduling queue in the Kubernetes-based batch scheduler, and the third operation is performed.

### Third operation: Sorting of the to-be-scheduled jobs

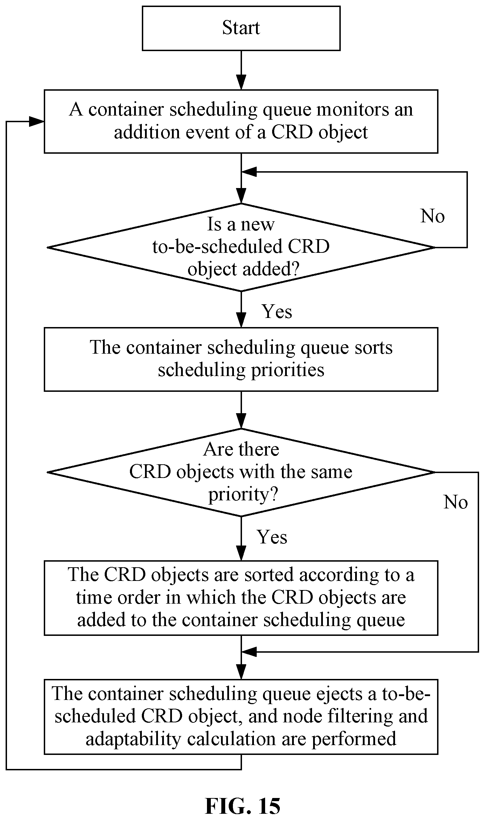

According to the scheduling priorities of the jobs defined in the CRD resource objects corresponding to the to-be-scheduled jobs and a time order in which the to-be-scheduled jobs reach the container scheduling queue in the Kubernetes-based batch scheduler, the container scheduling queue in the Kubernetes-based batch scheduler sorts the to-be-scheduled jobs to obtain the scheduling order, as shown in FIG. 15.

This operation may include the following.
(1) The container scheduling queue in the Kubernetes-based batch scheduler monitors an addition event of the CRD resource object corresponding to the to-be-scheduled job. A CRD resource object corresponding to a new to-be-scheduled job is added to the end of the queue by default.
(2) When receiving the addition of the CRD resource object corresponding to the new to-be-scheduled job, the container scheduling queue in the Kubernetes-based batch scheduler sorts all the to-be-scheduled jobs in the queue in descending order according to scheduling priority labels in the CRD resource objects corresponding to the to-be-scheduled jobs. That is, a CRD resource object corresponding to a to-be-scheduled job with the highest priority is placed at the head of the queue, and a CRD resource object corresponding to a to-be-scheduled job with the lowest priority is placed at the end of the queue.
(3) If the container scheduling queue in the Kubernetes-based batch scheduler includes CRD resource objects corresponding to multiple to-be-scheduled jobs with the same priority, the CRD resource objects are sorted according to a time order in which the CRD resource objects are added to the container scheduling queue in the Kubernetes-based batch scheduler (that is, first in, first out).
(4) After the CRD resource objects corresponding to all the to-be-scheduled jobs are sorted, the container scheduling queue in the Kubernetes-based batch scheduler ejects the CRD resource object corresponding to the to-be-scheduled job from the head of the queue, and the fourth operation is performed.

### Fourth operation: Node filtering and adaptability calculation

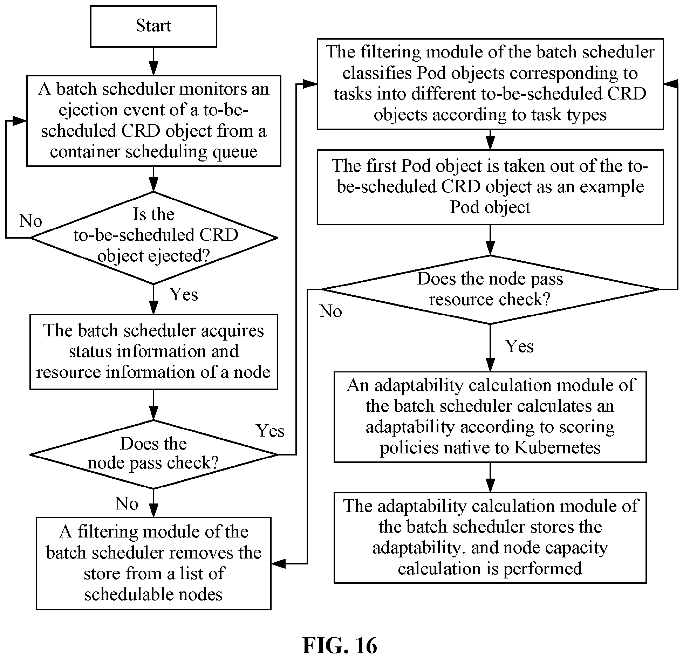

The filtering module of the Kubernetes-based batch scheduler filters cluster nodes according to node information in the cluster and resource information of the CRD resource object corresponding to the to-be-scheduled job. Then, the adaptability calculation module of the Kubernetes-based batch scheduler performs node adaptability calculation on nodes that pass the filtering, as shown in FIG. 16.

This operation may include the following.
(1) The Kubernetes-based batch scheduler monitors an ejection event of the CRD resource corresponding to the to-be-scheduled job from the container scheduling queue in the Kubernetes-based batch scheduler.
(2) When it is monitored that the CRD resource object corresponding to the to-be-scheduled job is ejected from the head of the container scheduling queue in the Kubernetes-based batch scheduler, the Kubernetes-based batch scheduler initiates a request to the Kubernetes etcd to acquire the status information and resource information of each node in the current cluster. The status information of the node mainly indicates whether the node can be scheduled. The resource information of the node refers to a total amount of resources of each type and an amount of available resources of each type in the node. Resources of various types of the node include CPU, GPU, memory, disk, and network bandwidth resources.
(3) The filtering module of the Kubernetes-based batch scheduler performs the status check on the acquired status of each node. If the status of the current node includes a NoExecute or NoSchedule taint, it indicates that the node is configured to be un-schedulable, and the node fails to pass the status check. Otherwise, the node passes the status check.
(4) The filtering module of the Kubernetes-based batch scheduler performs the resource check on the node that passes the status check. The filtering module of the Kubernetes-based batch scheduler takes the first Pod object out of the CRD resource object of the to-be-scheduled job as an example Pod object. Then, the filtering module of the Kubernetes-based batch scheduler acquires an amount of required resources of each type in the example Pod object. Resources of various types required by the example Pod object include the CPU, GPU, memory, disk, and network bandwidth resources. For any type of resource, if the amount of required resources of the example Pod object is greater than the amount of available resources of the node, the node fails to pass the resource check. Otherwise, the node passes the resource check.
(5) The filtering module of the Kubernetes-based batch scheduler stores nodes that pass the status check and the resource check in a list of schedulable nodes.
(6) After all the nodes in the cluster complete the filtering operation, the adaptability calculation module of the Kubernetes-based batch scheduler traverses the nodes in the list of schedulable nodes sequentially.
(7) For each node in the list of schedulable nodes, the adaptability calculation module of the Kubernetes-based batch scheduler performs the node adaptability calculation according to the amount of required resources of each type of the example Pod in the CRD resource object of the to-be-scheduled job and the amount of available resources of each type in the node. An adaptability value of the node is specifically a score of the node. The higher the score of the node, the more suitably the example Pod object is deployed on the node. The score of the node is calculated using preferred LeastRequestedPriority and BalancedResourceAllocation policies native to the Kubernetes.
(8) The adaptability calculation module of the Kubernetes-based batch scheduler stores the adaptability value of each node in the list of schedulable nodes, and the fifth operation is performed.

### Fifth operation: Node capacity calculation

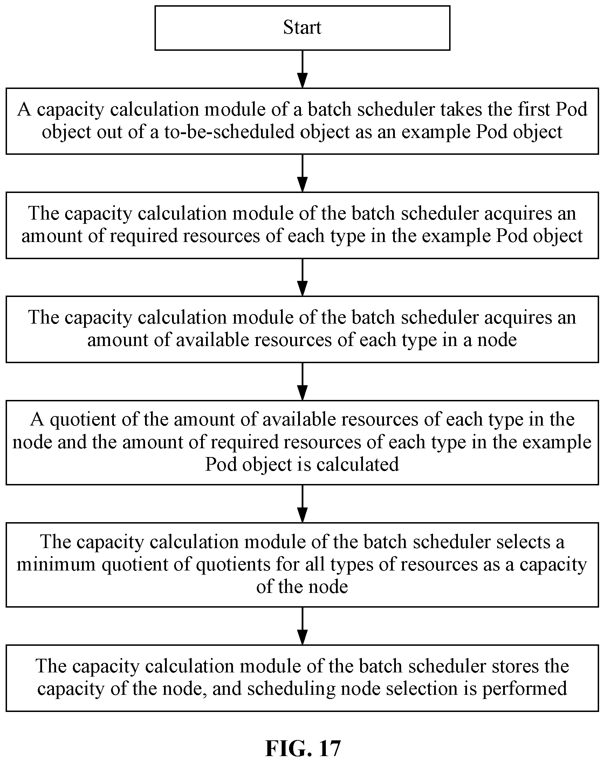

The capacity calculation module of the Kubernetes-based batch scheduler calculates the number of to-be-scheduled Pod objects that are in the CRD resource object corresponding to the to-be-scheduled job and that can be accommodated by each node in the list of schedulable nodes as the capacity of the node, as shown in FIG. 17.

This operation may include the following.
(1) The capacity calculation module of the Kubernetes-based batch scheduler takes a Pod object corresponding to the first task out of the CRD resource object corresponding to the to-be-scheduled job as the example Pod object. The capacity calculation module of the Kubernetes-based batch scheduler acquires the amount of required resources of each type in the example Pod object. The resources of various types required by the example Pod object include the CPU, GPU, memory, disk, and network bandwidth resources. Specifically, the capacity calculation module of the Kubernetes-based batch scheduler acquires a container list in the example Pod object, traverses container objects in the container list sequentially to acquire an amount of required resources of each type in each container object, and accumulates amounts of required resources of each type in the container objects as the amount of required resources of each type in the example Pod object.
(2) The capacity calculation module of the Kubernetes-based batch scheduler acquires the amount of available resources of each type in each node. The resources of various types of the node include the CPU, GPU, memory, disk, and network bandwidth resources.
(3) For each type of resource, the capacity calculation module of the Kubernetes-based batch scheduler divides the amount of available resources of the node by the amount of required resources of the example Pod object and takes an integer part. A minimum quotient of quotients for all types of resources is a maximum number of example Pod objects that are in the CRD resource object corresponding to the to-be-scheduled job and that can be accommodated by the node.
(4) The capacity calculation module of the Kubernetes-based batch scheduler stores the minimum quotient of the quotients for all types of resources as the capacity of the node, and the sixth operation is performed.

### Sixth operation: Scheduling node selection

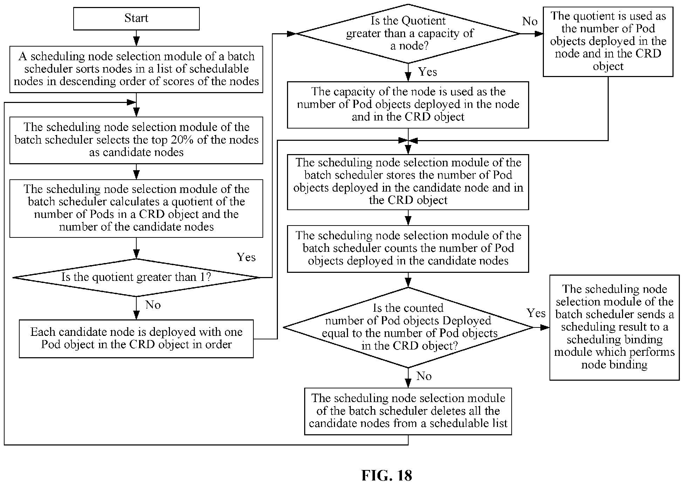

The scheduling node selection module of the Kubernetes-based batch scheduler selects a most appropriate scheduling node for a Pod object corresponding to each task in the to-be-scheduled CRD resource object according to adaptability and capacity values of the nodes in the list of schedulable nodes, as shown in FIG. 18.

This operation may include the following.
(1) The scheduling node selection module of the Kubernetes-based batch scheduler acquires adaptability and capacity values of each node in the list of schedulable nodes. The adaptability of the node is obtained through the node filtering and adaptability calculation in the third operation, and the capacity of the node is obtained through the node capacity calculation in the fourth operation.
(2) The scheduling node selection module of the Kubernetes-based batch scheduler selects the most appropriate scheduling node for the Pod object corresponding to each task in the CRD resource object corresponding to the to-be-scheduled job according to the adaptability and capacity values of each node. A node with the higher adaptability value indicates the higher adaptability to a task scheduled to the node and thus is preferentially considered in the scheduling node selection. The capacity value indicates an upper limit of the number of tasks in the to-be-scheduled job and deployed in the node and determines the number of tasks that can be scheduled by the node. Specifically, the scheduling node selection module of the Kubernetes-based batch scheduler sorts the nodes in the list of schedulable nodes in descending order of the adaptability values of the nodes.
(3) The scheduling node selection module of the Kubernetes-based batch scheduler selects the top 20% of the schedulable nodes sorted according to the adaptability values in the list of schedulable nodes and stores the top 20% of the schedulable nodes as a list of candidate scheduling nodes (where the list of candidate scheduling nodes includes at least one candidate node).
(4) The scheduling node selection module of the Kubernetes-based batch scheduler calculates a quotient of the number of Pod objects corresponding to tasks included in the CRD resource object corresponding to the to-be-scheduled job and the number of nodes in the list of candidate scheduling nodes to determine the number of Pod objects to be deployed in each candidate scheduling node in the list of candidate scheduling nodes and corresponding to tasks in the CRD resource object corresponding to the to-be-scheduled job.
(5) If the quotient is less than 1, it indicates that the number of nodes in the list of candidate scheduling nodes exceeds the number of Pods corresponding to the tasks in the CRD resource object corresponding to the to-be-scheduled job. Therefore, starting from a candidate scheduling node with the highest adaptability, each node is deployed with a Pod object corresponding to one task in the CRD resource object corresponding to the to-be-scheduled job until scheduling nodes are selected for the Pods corresponding to all the tasks in the CRD resource object corresponding to the to-be-scheduled job. The scheduling node selection module of the Kubernetes-based batch scheduler defines a variable referred to as a scheduling number, where the variable denotes the number of Pod objects deployed in each candidate node in a list of candidate nodes and corresponding to tasks in the CRD resource object corresponding to the to-be-scheduled job. Then, the scheduling node selection module of the Kubernetes-based batch scheduler sets the scheduling number of each node participating in the deployment of the CRD resource object corresponding to the to-be-scheduled jobs to 1; otherwise, the CRD resource object to be scheduled is deployed in the nodes in the list of candidate nodes according to the quotient. Specifically, for any node in the list of candidate nodes, if the quotient is greater than the capacity value of the node, the scheduling number of the node is set as the capacity value of the node; otherwise, the scheduling number of the node is set as the quotient.
(6) If the most appropriate scheduling node is not found for a Pod object corresponding to a task in the CRD resource object corresponding to the to-be-scheduled job, the whole to-be-scheduled job is considered as a scheduling failure. The scheduling node selection module of the Kubernetes-based batch scheduler writes a position and a cause of a scheduling error into a Kubernetes event log and stores the Kubernetes event log in the Kubernetes etcd. After the scheduling number is set for all the nodes in the list of candidate nodes, the scheduling node selection module of the Kubernetes-based batch scheduler stores scheduling numbers of all the nodes in the list of candidate scheduling nodes.
(7) The scheduling node selection module of the Kubernetes-based batch scheduler accumulates the scheduling numbers of all the nodes in the list of candidate nodes. If a sum of the scheduling numbers of all the nodes in the list of candidate nodes is less than the number of Pods corresponding to the tasks in the CRD resource object corresponding to the to-be-scheduled job, the scheduling node selection module of the Kubernetes-based batch scheduler clears the list of candidate scheduling nodes, selects the second 20% of the nodes sorted according to the adaptability values of the nodes, stores the second 20% of the nodes in the list of candidate scheduling nodes, and repeats operations (4) to (6) until the Pod objects corresponding to all the tasks in the CRD resource object corresponding to the to-be-scheduled job are specified with scheduling nodes. If the sum of the scheduling numbers is equal to the number of Pods in the CRD resource object to be scheduled, it indicates that the most appropriate scheduling node has been found for the Pod objects corresponding to all the tasks in the CRD resource object corresponding to the to-be-scheduled job. The scheduling node selection module of the Kubernetes-based batch scheduler sends the Pod object corresponding to each task in the CRD resource object of the to-be-scheduled job and its corresponding scheduling node as the scheduling result to the scheduling binding module of the Kubernetes API-Server, and the seventh operation is performed.

### Seventh operation: Node binding

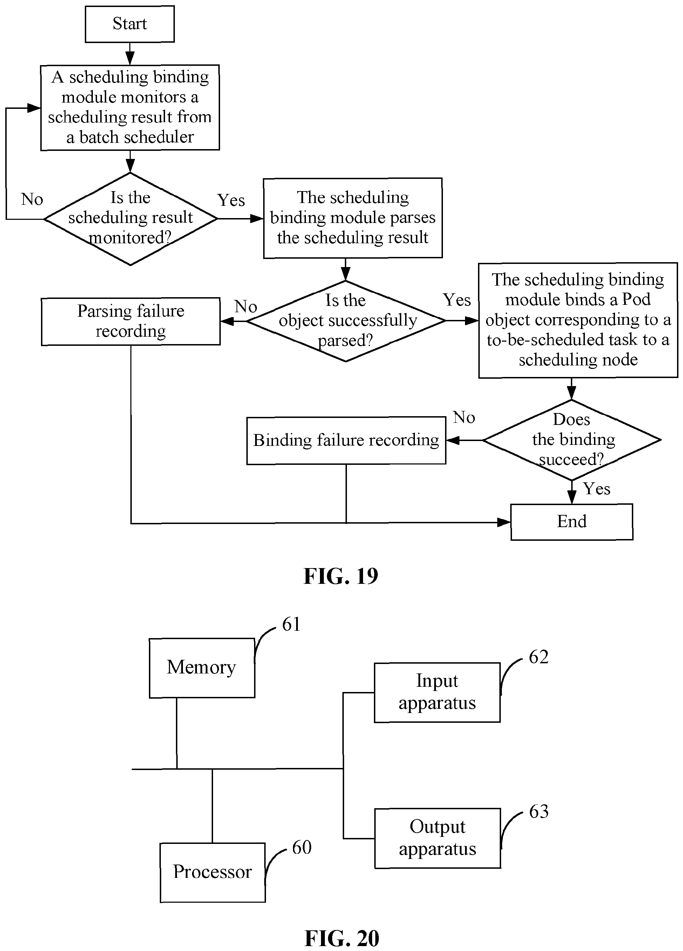

The scheduling binding module of the Kubernetes API-Server binds the Pod object corresponding to each task in the CRD resource object corresponding to the to-be-scheduled job to its corresponding scheduling node, as shown in FIG. 19.

This operation may include the following.
(1) The scheduling binding module of the Kubernetes API-Server monitors a scheduling result sending event of the Kubernetes-based batch scheduler.
(2) If the scheduling result sent by the Kubernetes-based batch scheduler is monitored, the scheduling binding module of the Kubernetes API-Server parses the scheduling result to obtain the Pod object corresponding to each task in the CRD resource object corresponding to the to-be-scheduled job and its scheduling node. If the scheduling binding module of the Kubernetes API-Server parses the object incorrectly, the scheduling binding module of the Kubernetes API-Server writes a position and a cause of a parsing error into a Kubernetes event log and stores the Kubernetes event log in the Kubernetes etcd.
(3) The scheduling binding module of the Kubernetes API-Server binds the Pod object corresponding to each task in the CRD resource object corresponding to the to-be-scheduled job to its scheduling node. Specifically, the scheduling binding module of the Kubernetes API-Server traverses the Pod objects corresponding to the tasks in the CRD resource object corresponding to the to-be-scheduled job, sets a NodeName field in the Pod object corresponding to the to-be-scheduled task as a name of its scheduling node, and asynchronously updates a NodeName field of the Pod in the Kubernetes API-Server to the name of the node. If a Pod object corresponding to part of the tasks in the CRD resource object corresponding to the to-be-scheduled job fails to be bound to its scheduling node, the scheduling binding module of the Kubernetes API-Server writes a position and a cause of a binding error into a Kubernetes event log and stores the Kubernetes event log in the Kubernetes etcd.
(4) When the Pod objects corresponding to all the tasks in the CRD resource object corresponding to the to-be-scheduled job are bound to their scheduling nodes, the CRD resource object corresponding to the to-be-scheduled job completes a scheduling process.

FIG. 20 is a structural diagram of an electronic device according to an embodiment of the present application. The electronic device includes a processor 60, a memory 61, an input apparatus 62, and an output apparatus 63. At least one processor 60 may be included in the electronic device. One processor 60 is shown as an example in FIG. 20. The processor 60, the memory 61, the input apparatus 62, and the output apparatus 63 in the electronic device may be connected via a bus or in other manners. The connection via a bus is shown as an example in FIG. 20.

As a computer-readable storage medium, the memory 61 may be configured to store software programs, computer-executable programs, and modules, for example, modules (a task classification module 501, a cluster parameter module 502, and a scheduling setting module 503) corresponding to a container scheduling apparatus in an embodiment of the present application. The processor 60 executes software programs, instructions, and modules stored in the memory 61 to perform function applications and data processing of the electronic device, that is, to perform the preceding container scheduling method.

The memory 61 may mainly include a program storage region and a data storage region. The program storage region may store an operating system and an application program required by at least one function. The data storage region may store data created according to the use of the electronic device. Additionally, the memory 61 may include a high-speed random-access memory and may also include a nonvolatile memory, such as at least one magnetic disk memory, a flash memory, or another nonvolatile solid-state memory. In some examples, the memory 61 may further include memories remotely disposed relative to the processor 60. These remote memories may be connected to the electronic device via a network. Examples of the preceding network include, but are not limited to, the Internet, an intranet, a local area network, a mobile communication network, and a combination thereof.

The input apparatus 62 may be configured to receive inputted digital or character information and generate key signal input related to user settings and function control of the electronic device. The output apparatus 63 may include a display device such as a display screen.

An embodiment of the present application provides a storage medium including computer-executable instructions. When the computer-executable instructions are executed by a computer processor, a container scheduling method is performed. The method includes the following operations.

Task containers corresponding to a service job are classified into at least one customized description resource object according to task types of the task containers.

An adaptability and a capacity of each cluster node to each of the task containers in the at least one customized description resource object are determined.

A scheduling relationship between the cluster node and the task containers is configured according to the adaptability and the capacity.

From the preceding description of embodiments, it is apparent to those skilled in the art that the present application may be implemented by software and necessary general-purpose hardware or may be implemented by hardware. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the methods in the embodiments of the present application.

It is to be noted that units and modules included in the preceding embodiment of the apparatus are divided according to functional logic, and the division is not limited to this as long as the corresponding functions can be implemented. Additionally, the specific names of function units are used for distinguishing between each other and are not to limit the scope of the present application.

It is to be understood by those having ordinary skill in the art that some or all operations of the preceding method and function modules/units in the preceding system or device may be implemented as software, firmware, hardware, and suitable combinations thereof.

In the hardware implementation, the division of the preceding function modules/units may not correspond to the division of physical components. For example, one physical component may have multiple functions, or one function or operation may be performed jointly by multiple physical components. Some or all physical components may be implemented as software executed by a processor such as a CPU, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory, or other memory technologies, a compact disc read-only memory (CD-ROM), a digital versatile disc (DVD), or other optical disk storages, a magnetic cassette, a magnetic tape, a magnetic disk, or other magnetic storage devices, or any other medium that can be used for storing desired information and can be accessed by a computer. Additionally, as is known to those having ordinary skill in the art, the communication media generally include computer-readable instructions, data structures, program modules, or other data in carriers or in modulated data signals transported in other transport mechanisms and may include any information delivery medium.

## Claims

1. A container scheduling method, comprising:
classifying task containers corresponding to a service job into at least one customized description resource object according to task types of the task containers;
determining an adaptability and a capacity of a cluster node to each of the task containers in the at least one customized description resource object; and
configuring a scheduling relationship between the cluster node and the task containers according to the adaptability and the capacity.

2. The container scheduling method of claim 1, further comprising:
sorting the at least one customized description resource object according to a task queue.

3. The container scheduling method of claim 1, further comprising:
screening the at least one customized description resource object according to a resource object type.

4. The container scheduling method of claim 1, wherein classifying the task containers corresponding to the service job into the at least one customized description resource object according to the task types of the task containers comprises:
creating the task containers corresponding to the service job, wherein the task containers correspond to a task comprised in the service job and each of the task containers comprises an image name, a container startup command, a container startup parameter, and a task type label;
creating the at least one customized description resource object corresponding to the service job, wherein each of the at least one customized description resource object comprises a name, a job type label, and a scheduling priority label; and
classifying each of the task containers according to the task type label of each of the task containers into a customized description resource object with a job type label matching the task type label among the at least one customized description resource object.

5. The container scheduling method of claim 1 or 2, wherein determining the adaptability and the capacity of the cluster node to each of the task containers in the at least one customized description resource object comprises:
acquiring a target resource object from the at least one customized description resource object and acquiring resource information of the cluster node;
extracting a first task container from the target resource object as an example container;
extracting an amount of required resources of the example container;
determining the adaptability according to a degree of matching between the amount of required resources and an amount of available resources in the resource information; and
determining an accommodation number of task containers by the cluster node according to the amount of required resources and the amount of available resources in the resource information and using the accommodation number as the capacity.

6. The container scheduling method of claim 5, further comprising:
removing a cluster node whose status information comprises a taint label from at least one cluster node; and
removing a cluster node whose amount of available resources is less than the amount of required resources from the at least one cluster node.

7. The container scheduling method of claim 5, wherein determining the adaptability according to the degree of matching between the amount of required resources and the amount of available resources in the resource information comprises:
determining the degree of matching between the amount of required resources and the amount of available resources according to a LeastRequestedPriority policy and a BalancedResourceAllocation policy to use the degree of matching as the adaptability.

8. The container scheduling method of claim 5, wherein determining the accommodation number of task containers by the cluster node according to the amount of required resources and the amount of available resources in the resource information comprises:
extracting the amount of required resources of each of a plurality of resource types in the example container and the amount of available resources of each of the plurality of resource types in the resource information; and
for each of the plurality of resource types, determining a quotient of the amount of available resources and the amount of required resources to obtain a plurality of quotients, and using a minimum quotient of the plurality of quotients as the accommodation number.

9. The container scheduling method of claim 1, wherein configuring the scheduling relationship between the cluster node and the task containers according to the adaptability and the capacity comprises:
for a same task container, sorting a plurality of cluster nodes in descending order of adaptability values of the plurality of cluster nodes;
using top 20% of the sorted plurality of cluster nodes as candidate cluster nodes;
determining a quotient of a total number of the task containers and a total number of the candidate cluster nodes;
allocating the task containers to a plurality of candidate cluster nodes according to the quotient and the capacity; and
building a scheduling relationship between the task containers and the plurality of candidate cluster nodes corresponding to the task containers.

10. The container scheduling method of claim 9, wherein allocating the task containers to the plurality of candidate cluster nodes according to the quotient and the capacity comprises:
determining, in descending order of adaptability values of the plurality of candidate cluster nodes, whether the capacity of each candidate cluster node of the plurality of candidate cluster nodes is greater than or equal to the quotient;
in response to determining that the capacity of each candidate cluster node is greater than or equal to the quotient, allocating a number of task containers to each candidate cluster node, the number being the quotient; and
in response to determining that the capacity of each candidate cluster node is less than the quotient, allocating a number of task containers to each candidate cluster node, the number being the capacity.

11. The container scheduling method of claim 9, further comprising:
in response to determining a task container unallocated to any of the candidate cluster nodes, using second 20% of the sorted plurality of cluster nodes as new candidate cluster nodes and allocating the unallocated task container to a new candidate cluster node of the new candidate cluster nodes.

12. The container scheduling method of claim 9, wherein building the scheduling relationship between the task containers and the plurality of candidate cluster nodes corresponding to the task containers comprises:
setting a node name field for each of the task containers as identification information of a candidate cluster node corresponding to each of the task containers.

13. The container scheduling method of claim 2, wherein sorting the at least one customized description resource object according to the task queue comprises at least one of:
sorting the at least one customized description resource object in the task queue according to an entry order of the at least one customized description resource object; or
sorting the at least one customized description resource object in the task queue according to a scheduling priority of the at least one customized description resource object.

14. An electronic device, comprising:
at least one processor; and
a memory configured to store at least one program;
wherein the at least one program, when executed by the at least one processor, causes the at least one processor to perform the container scheduling method of any one of claims 1 to 13.

15. A computer-readable storage medium having at least one program stored thereon, wherein the at least one program, when executed by at least one processor, causes the container scheduling method of any one of claims 1 to 13 to be performed.
